(19) Europäisches Patentamt
European Patent Office
Office européen des brevets

(11) **EP 3 961 598 B1**

(12) **EUROPEAN PATENT SPECIFICATION**

(45) Date of publication and mention
of the grant of the patent:
**02.10.2024 Bulletin 2024/40**

(21) Application number: **20193008.8**

(22) Date of filing: **27.08.2020**

(51) International Patent Classification (IPC):
$G08G\ 1/16^{(2006.01)}$   $G08G\ 1/01^{(2006.01)}$
$G06N\ 3/08^{(2023.01)}$   $G05D\ 1/00^{(2024.01)}$
$G06N\ 3/04^{(2023.01)}$

(52) Cooperative Patent Classification (CPC):
**G08G 1/0112; G06N 3/006; G06N 3/045;
G06N 3/084; G06N 7/01; G08G 1/0133;
G08G 1/0145; G08G 1/16;** G06N 5/043

(54) **METHOD AND SYSTEM FOR ENABLING COOPERATIVE COORDINATION BETWEEN AUTONOMOUSLY ACTING ENTITIES**

VERFAHREN UND SYSTEM ZUR ERMÖGLICHUNG EINER KOOPERATIVEN KOORDINATION ZWISCHEN AUTONOM WIRKENDEN EINHEITEN

PROCÉDÉ ET SYSTÈME POUR ACTIVER UNE COORDINATION COOPÉRATIVE ENTRE DES ENTITÉS À ACTION AUTONOME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.03.2022 Bulletin 2022/09**

(73) Proprietor: **Bayerische Motoren Werke
Aktiengesellschaft
80809 München (DE)**

(72) Inventor: **Heiden, Tessa
80333 München (DE)**

(56) References cited:
**US-A1- 2019 266 489**   **US-A1- 2020 090 074**
**US-A1- 2020 151 564**   **US-A1- 2020 244 707**

- **SANTIAGO CUERVO ET AL: "Emergent
cooperation through mutual information
maximization", ARXIV.ORG, CORNELL
UNIVERSITY LIBRARY, 201 OLIN LIBRARY
CORNELL UNIVERSITY ITHACA, NY 14853, 21
June 2020 (2020-06-21), XP081699784**
- **NATASHA JAQUES ET AL: "Intrinsic Social
Motivation via Causal Influence in Multi-Agent
RL", ARXIV.ORG, CORNELL UNIVERSITY
LIBRARY, 201 OLIN LIBRARY CORNELL
UNIVERSITY ITHACA, NY 14853, 19 October 2018
(2018-10-19), XP080999653**

**Description**

The present document is directed at a method and at a corresponding system for enabling autonomously acting entities, such as autonomous vehicles, to act in a coordinated and/or cooperative manner.

Autonomous vehicles are configured to move autonomously within a street network. For this purpose, an autonomous vehicle comprises a control unit which is configured to take driving actions (such as a steering action and/or an acceleration action and/or deceleration action) in dependence of the current state of the vehicle. The state of the vehicle may include information regarding the internal state of the vehicle itself (such as the position, the driving speed, the heading angle, etc.) and/or information regarding the vehicle's observation of the environment of the vehicle (which is captured using e.g. one or more environment sensors of the vehicle).

The control unit of the vehicle may make use of a so-called policy (e.g. a control algorithm) for determining a driving action based on the state of the vehicle. The policy may have been training offline using machine-learning techniques. In particular, the policy may be defined using an artificial neural network with a set of trained parameters (that have been trained using machine-learning techniques).

US 2019/0266489 A1 describes a method for interaction-aware decision making. US 2020/090074 A1 and US 2020/244707 A1 describe methods for multi-agent reinforcement learning.

The present document is directed at the technical problem of enabling an autonomously acting entity, notably an autonomous vehicle, to act in a cooperative and/or coordinated manner. In particular, the present document is directed at providing a trained policy for an autonomously acting entity, which fosters a cooperative and/or coordinated behavior of the autonomously acting entity. The technical problem is solved by each one of the independent claims. Preferred examples are specified in the dependent claims.

According to an aspect a method for determining a set of policies for controlling a corresponding set of different acting entities (e.g. vehicles), wherein the set of different acting entities is represented by a corresponding set of agents, according to appended claim 1.

The method may be executed by a system comprising the set of entities, wherein the entities are configured to exchange information among each other (e.g. with regards to the actions taken by the different entities and/or with regards to the states of the different entities). Hence, training of the different policies for the different entities may be performed in a centralized manner. On the other hand, the different policies may (subsequently, after training) be used by the different entities in an independent and/or decentralized manner. By performing training of the policies in a centralized manner, policies may be trained which motivate and/or foster a cooperative and/or coordinated behavior of the different entities (even when, subsequent to training, each entity applies its policy independently from the other entities).

The method may be directed at learning a set of state-action-functions and/or the set of policies for the corresponding set of agents (i.e. entities) using an iterative training algorithm. In particular, the method may make use of a Multi-Agent Deep Deterministic Policy Gradient (MADDPG) algorithm for determining the set of policies and/or the set of state-action-functions. The set of state-action-functions may be trained such that after training each state-action-function is indicative of a cumulated reward which is to be expected for different state-action pairs.

The state-action-functions may be such that the state-action function for an arbitrary first agent depends on the action and the state of the first agent, as well as on the action and the state of at least one other agent (notably of all other agents) from the set of agents. By doing this, centralized training may be implemented in an efficient and robust manner.

The method comprises, at a given time instant of the iterative training phase, determining a set of actions of the corresponding set of agents using the corresponding set of state-action-functions (at the given time instant), respectively. As indicated above, the set of state-action-functions may be dependent on the set of states of the corresponding set of agents, respectively. In particular, the state-action-function of an agent may be indicative of the action that the agent should take, when the agent is in a particular state (notably the state-action-function of an agent may be indicative of the action which maximizes the expected cumulated reward of the agent).

The method may comprise determining sensor data from sensors of the set of acting entities. Example sensors are environment sensors for sensing the environment of an entity (e.g. a camara, a radar sensor, a lidar sensor, etc.) and/or a state sensor for sensing an internal state of an entity (e.g. a speed sensor and/or an acceleration sensor). The set of states of the corresponding set of agents may then be determined based on the sensor data (i.e. based on observations of the entities or agents).

In addition, the method comprises determining a set of updated states of the corresponding set of agents based on the determined set of actions. In particular, (e.g. in the context of a simulation and/or in the context of actual operation of the set of entities) the set of entities is operated according to the corresponding set of actions. Using the sensor data from the sensors of the different entities, the set of updated states may be determined.

The method further comprises determining a set of instant rewards for the corresponding set of agents based on the set of actions and based on the set of states and/or based on the set of updated states of the corresponding set of agents. Each entity or corresponding agent may exhibit a certain reward function. The reward function for an entity or agent may specify a target behavior of the entity or agent (such as a collision free operation and/or such as movement of the entity along a target trajectory). In the contest of simulation and/or actual operation of the set of entities, the instant rewards, i.e. the values of the rewards functions, for a tuple of action, state and/or updated state may be determined for each of the set of agents. Hence, the set of instant rewards for the corresponding set of agents is determined using a corresponding set of reward functions for the corresponding set of agents, respectively.

In addition, the method comprises determining at least one empowerment term which is indicative of mutual information and/or correlation between at least one action from the set of actions and at least one updated state from the set of updated states. In particular, the at least one empowerment term may be computed per individual state (of one or more agents). The at least one empowerment term may be indicative of maximal mutual information and/or correlation between the set of actions and set of updated states. Alternatively, or in addition, the empowerment term may be indicative of how much the actions of one or more agents influences the states of one or more (other) agents. In particular, the empowerment term may be such that the influence of the actions of one or more agents on the states of one or more (other) agents is increased (notably maximized). In a preferred example, the at least one empowerment term is indicative of an approximation of the maximum of the mutual information between at least one action from the set of actions and at least one updated state from the set of updated states.

In particular, the method comprises determining a set of transfer empowerment terms for the corresponding set of agents. A transfer empowerment term may be determined such that the transfer empowerment term for a fist agent is indicative of mutual information and/or correlation between the action of the first agent and the updated states of one or more other agents from the set of agents. Alternatively, or in addition, a transfer empowerment term may be determined such that the transfer empowerment term for a fist agent is indicative of mutual information and/or correlation between the actions of one or more other agents from the set of agents and the updated state of the first agent. By taking into account transfer empowerment terms, policies may be determined which foster a coordinated and/or cooperative behavior in a particularly reliable manner. Alternatively, or in addition, the method may comprise determining a joint empowerment term for the set of agents. The joint empowerment term may be indicative of mutual information and/or correlation between the complete set of actions of the set of agents and the complete set of updated states of the set of agents. By taking into account a joint empowerment term, policies may be determined which foster a coordinated and/or cooperative behavior in a particular reliable manner.

The method further comprises updating the set of state-action-functions based on the set of instant rewards and based on the at least one empowerment term, notably based on the set of empowerment terms, respectively, and/or based on the joint empowerment term. The state-action-functions may each be represented by an artificial neural network each comprising a set of parameters. Updating the set of state-action-functions may comprise updating the set of parameters of the artificial neural networks of the set of state-action-functions, thereby enabling the set of state-action-functions to be determined in a precise and reliable manner.

The set of policies for controlling the corresponding set of acting entities (notably autonomous vehicles) is determined based on the updated set of state-action-functions, respectively (notably subsequent to convergence of the training algorithm). In particular, the policy for an entity is determined based on the state-action-function for the corresponding agent by determining for each possible state an action which maximizes the state-action-function.

By taking into account empowerment during the centralized training of the policies for the set of agents or entities, a cooperative and/or coordinated behavior of the entities may be implemented in a reliable manner. For this purpose, the method may comprise (subsequent to training) controlling at least one of the set of acting entities using the corresponding policy (in a decentralized and/or independent manner).

According to a further aspect, a policy for controlling an acting entity (notably a vehicle) is described, which has been determined using the method described in the present document.

According to a further aspect, a method for controlling an acting entity (notably a vehicle) using a policy is described, wherein the policy has been determined using the method described in the present document.

According to another aspect of the invention, a training system for determining a set of policies for controlling a corresponding set of different acting entities (notably vehicles) which is represented by a corresponding set of agents is defined according to appended claim 9. The training system is configured to determine a set of actions of the corresponding set of agents using a corresponding set of state-action-functions, respectively.

Furthermore, the system is configured to determine a set of updated states of the corresponding set of agents based on the determined set of actions. In addition, the system is configured to determine a set of instant rewards for the corresponding set of agents based on the set of actions and based on the set of states and/or based on the set of updated states of the corresponding set of agents. The system is further configured to determine at least one empowerment term which is indicative of mutual information and/or correlation between at least one action from the set of actions and at least one updated state from the set of updated states. Furthermore, the system is configured to update the set of state-action-functions based on the set of instant rewards and based on the at least one empowerment term. The set of policies for controlling the corresponding set of acting entities may be determined based on the updated set of state-action-functions, respectively.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1a shows example components of a vehicle, as an example of an acting entity;
Fig. 1b shows an example situation with multiple interacting entities;
Fig. 2 illustrates an example scheme for training the policies of multiple agents (for multiple acting entities); and
Fig. 3 shows a flow chart of an example method for determining policies for multiple agents (for multiple acting entities).

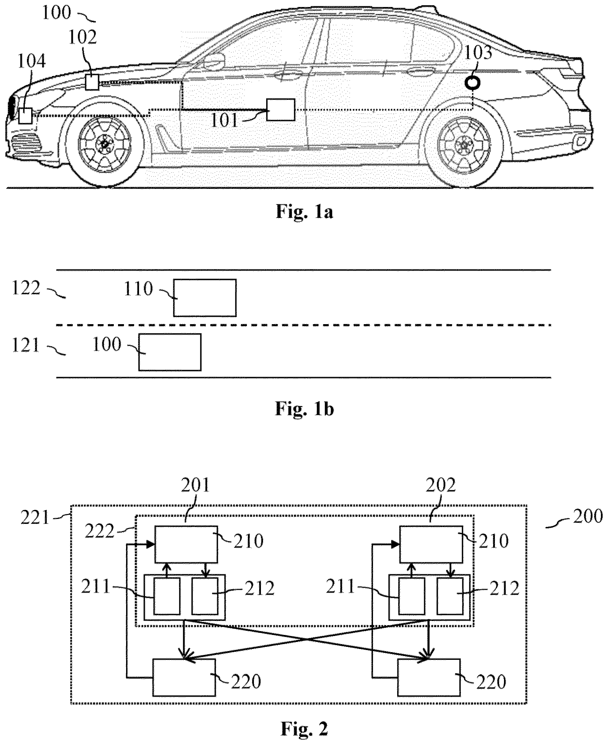

As outlined above, the present document is directed at enabling acting entities to act in a coordinated and/or cooperative manner. In this context, Fig. 1a shows a vehicle as an example for an acting entity. It should be noted that the aspects which are described herein with respect to a vehicle are applicable to an acting entity in general (such as a household robot, etc.).

The vehicle 100 comprises one or more sensors 102 (notably one or more environment sensors and/or one or more internal sensors) which are configured to determine sensor data regarding the internal state and/or the surrounding state of the vehicle 100. Example sensors 102 are: a camera for capturing the environment, a lidar sensor for capturing the environment, a radar sensor for capturing the environment, a speed sensor for determining the speed of the vehicle, a position sensor for determining the position of the vehicle, etc.

A control unit 101 of the vehicle 100 may be configured to determine the current state of the vehicle 100 based on the sensor data. Furthermore, the vehicle 100 may make use of a pre-determined policy for determining an action to be taken by the vehicle 100. The action may relate to autonomous driving of the vehicle 100.

Example actions are: accelerating the vehicle 100, decelerating the vehicle 100, steering the vehicle 100, turning on a direction indicator of the vehicle 100, etc.

Furthermore, the control unit 101 may be configured to control one or more actors 103, 104 (e.g. an engine, a braking unit, a steering unit, a direction indicator) in dependence of the determined action.

The process of determining the state of the vehicle 100, of determining an action based on the state, and of causing the action to be executed (thereby changing the state of the vehicle 100) may be repeated (periodically) at subsequent time instants, thereby causing the vehicle 100 to drive in an autonomous manner.

Fig. 1b shows a driving situation, where a first vehicle 100 is driving on a first lane 121 and a second vehicle 110 is driving on a second lane 122 of a road. The first vehicle 100 may want to change from the first lane 121 to the second lane 122 (e.g. in order to overtake another vehicle, not shown in Fig. 1b). For this purpose, the control unit 101 of the first vehicle 100 may determine as an action to active the direction indicator. A human driver of the second vehicle 110, who acts in a cooperative manner, would take the activated direction indicator of the first vehicle 100 as an indication to accelerate or to decelerate the second vehicle 110, in order to create a gap on the second lane 122, which allows the first vehicle 100 to perform the lane change. On the other hand, an autonomously driving second vehicle 110 may ignore the activated direction indicator of the first vehicle 100, thereby preventing the first vehicle 100 from performing the lane change.

An approach for enabling autonomous vehicles 100, 110 to drive in a coordinated and cooperative manner is the use of multi-agent reinforcement learning for determining the policies of the autonomous vehicles 100, 110. Fig. 2 illustrates an example scheme 200 for training the policies 210 of autonomous vehicles 100 (in general autonomously acting entities) using a multi-agent reinforcement learning approach.

The scheme 200 makes use of a centralized training phase 221 during which the different agents 201, 202 (for different acting entities 100, 110) share information among each other. On the other hand, during the execution phase 222 the (trained) policies 210 for the different agents 201, 202 (and the different acting entities 100, 110) are used in an independent manner from one another. Nevertheless, the fact that the policies 210 for the different agents 201, 202, i.e. for the different acting entities 100, 110, have been trained jointly, enables the provision of policies 210 that foster coordinated and/or cooperative behavior between the different entities 100, 110.

Within the training scheme 200 each acting entity 100, 110 (e.g. each vehicle) is represented by a corresponding agent 201, 202. At a particular time instant k an entity 201, 202 determines its state 211 (based on observations, i.e. based on sensor data from one or more sensors 102). Using the current version of the policy 210 (at the time instant k) an action 212 may be determined based on the state 211. Using a reward function for the agent 201, 202 an instant reward $r$ (at the time instant $k$) may be determined based on the state and the action at the time instant $k$. The reward function may e.g. be directed at avoiding collisions between different agents 201, 202 (i.e. entities 100, 110) and/or at guiding the agents 201, 202 along a pre-determined trajectory (e.g. within the center of the current lane 121, 122).

The action taken by an agent 201, 202 at the time instant $k$ leads to an updated state of the agent 201, 202 at the subsequent time instant $k + 1$ (which may be observed using the sensor data of one or more sensors 102). The instant reward $r$, the action $a$ and the state $s$ at the time instant $k$, and possibly the updated state s at the subsequent time instant $k + 1$ may be used to updated a state-action-function $Q$ 220, which is configured to indicate the expected cumulated, discounted, reward for different state-action-pairs. The state-action-function $Q$ 220 of an agent 201, 202 may be used to define and/or updated the policy 210 of the agent 201, 202, by determining for each possible state 211 the corresponding action 212 that maximizes the state-action-function $Q$ 220 (i.e. that maximized the expected cumulated, discounted, reward).

The agents 201, 202 may be operated for a sequence of time instants $k$ (e.g. using simulations or actual operation of corresponding entities 100, 110), thereby iteratively updating the state-action-function $Q$ 220 and by consequence updating the policy 210. The state-action-function $Q$ 220 and/or the policy 210 may each be modelled by a neural network with parameters that are trained during the iterative training procedure.

The iterative training procedure for training the state-action-function $Q$ 220 typically makes use of an objective function. The objective function depends on the reward function and notably on the instant rewards, which are attributed to the agent 201, 202. A possible approach for optimizing the objective function is to iteratively updated the state-action-function $Q$ 220 using the corresponding Bellman equation for the objective function.

In order to take into account the impact of the different agents 201, 202 onto each other, state-action-functions $Q$ 220 may be trained for the different agents 201, 202, which not only depend on the state and the action of a particular agent 201, 202, but also on the state and the action of the one or more other agents 201, 202. Such a state-action-function 220 for an agent 201, 202 may be referred to as a centralized state-action-function 220 for the agent 201, 202. By training such centralized state-action-functions 220 for the different agents 201, 202, a coordinated behavior between the agents 201, 202 may be included into the policies 210 for the different agents 201, 202.

In order to increase the robustness and performance of such coordinated agents, an empowerment term that is indicative of the empowerment of the different agents 201, 202 may be taken into account within the objective function for determining the centralized state-action-functions 220 for the different agents 201, 202. Empowerment may be defined based on the mutual information $I$ between the actions 211 and the states 212 of one or more agents 201, 202. In particular, the empowerment term may be indicative of the maximized mutual information $I$ between the actions 211 and the states 212 of one or more agents 201, 202.

When training the centralized state-action-function 220 of a first agent 201 one or more empowerments terms may be taken into account within the objective function, in particular,

- a joint empowerment term that is directed at maximizing the mutual information $I$ between the actions 211 and future states 212 of all agents 201, 202; and/or
- a transfer empowerment term that is directed at maximizing the mutual information $I$ between the action 211 of the first agent 201 and the future state of the one or more other agents 202, and/or between the actions 211 of the one or more other agents 202 and the future state of the first agent 201.

By taking into account at least one empowerment term during training of the centralized state-action-functions 220 for the different agents 201, 202, policies 201 may be determined, which stimulate coordination between different agents 201, 202 and consequently between different acting entities 100, 110.

Hence, in the present document transfer and joint empowerment is used to increase the robustness and performance of coordinated agents 201, 202. Empowerment is combined with reinforcement learning (RL), and variational methods may be used to compute empowerment efficiently in a continuous domain. By adding an empowerment term to the reinforcement learning method an additional heuristic is provided that speeds up learning and that leads to better and more stable results. Details regarding the calculation of empowerment and/or the calculation of an empowerment term are described in Christoph Salge, Cornelius Glackin and Daniel Polani, "Empowerment - An Introduction", arxiv: 1310.1863v2 [cs.AI] 8 Oct 2013, which is incorporated herein in its entirety (see notably chapter 4.6.1).

In cooperative tasks, $R$ may indicate the reward function that maps the combination of states 211 and joint actions 212 of all agents 201, 202 into a single scalar reward. A Dec-POMDP (partially observable Markov decision process), an extension of the MDP (Markov decision process) for multi-agent systems, being both decentralized and partially observable, may be considered. This means that each of the n agents 201. 202 conditions its action 212 on its partial observation of the environment and a tuple may be defined: (**S**; **A**; $T$; **O**; $O$; $R$; $n$). $\mathbf{s} \in \mathbf{S}$ may be the true global state in the environment. Furthermore, at each time step $k$, the state transition function $T$ may map the joint action $\mathbf{a} \in \mathbf{A}$ and the state s to a new or updated state $s'$, with probability distribution $P(s'|s; \mathbf{a})$. Since the environment is partially observable and all agents 201, 202 obtain their own observation of the environment (through the sensor data of the one or more sensors 102), the observation function O may map the joint action $\mathbf{a}$ and next state $s'$ to a new joint observation $\mathbf{o} \in \mathbf{O}$ with probability distribution $P(\mathbf{o}|\mathbf{a}; s')$.

DDPG (Deep Deterministic Policy Gradient) and its extension for the multi-agent setting, MADDPG, may be used as the underlying algorithm for determining the policies $\mu$ of the different agents 201, 202. More specifically, the MADDPG is an off-policy variant with centralized critics. The MADDPG algorithm learns an approximation for the optimal action-value-function $Q^*(s; a)$, as well as for the optimal action $a^*(s)$, which are the critic $Q_\phi(s; a)$ with parameters $\phi$ and the actor (i.e. the policy) $\mu_\theta(s)$ with parameters $\theta$. Details regarding the MADDPG algorithm are described in R. Lowe, Y. I. Wu, A. Tamar, J. Harb, O. P. Abbeel, and I. Mordatch. Multi-agent actor critic for mixed cooperative-competitive environments, In Advances in neural information processing systems, pages 6379-6390, 2017, which is incorporated herein in its entirety.

As outlined above, empowerment is used in the present document for training the critic $Q_\phi(s; a)$ (i.e. the state-action functions 220) and the actor $\mu_\theta(s)$ (i.e. the policies 210). Empowerment $\varepsilon(s)$ may be the channel capacity between an action sequence $\overrightarrow{a_T} = (a_1; a_2; \dots; a_T)$ (with one or more actions 212) and one or more future states $s_T$ of an agent 201, 202. The channel capacity may be the maximal mutual information $I$, maximized by the distribution $\omega(\overrightarrow{a_T}|s)$ in a particular state:

$$\varepsilon(s) = \max_{\omega} I\big[\,\overrightarrow{a_T}; s_T\,|\mathrm{s}\big]$$

The method described herein may not only maximize the future cumulative reward provided by the environment, but also one or more empowerment terms $\varepsilon$. The loss function for the critic may be the mean-squared Bellman error, now including $\varepsilon$ for all agent's observations $s$. In this way the agents 201, 202 are incentivized to solve the task at hand in a controlled way, because that is what empowerment facilitates. Furthermore, by relying on CTDE (Centralised training with decentralised execution), it can be computed for the actions and observations of all agents 201, 202, thus extending this notion to the multi-agent setting.

Extending the objective of the DDPG to n policies 210, wherein the set of all policies is denoted by $\boldsymbol{\mu}$ and wherein a centralized state-action function is denoted by $Q^{\mu}_{i,\phi}(\mathbf{a}, \mathbf{o})$ for some agent $i$. The centralized state-action function 220 of an agent 201, 202 takes as input the actions $\mathbf{a}$ 212 and observations $\mathbf{o}$ 211 of all agents 201, 202. The objective may then be written as

$$L(\phi_i, D) = \mathop{\mathrm{E}}_{(s,a,o,r,s'.o')\sim D}\left[\left(Q^{\mu}_{i,\phi}(\mathbf{a}, \mathbf{o}) - \left(r_i + \varepsilon(s) + \gamma \max_{\mathbf{a}'} Q^{\mu}_{i,\phi}(\mathbf{a}', \mathbf{o}')\right)\right)^2\right]$$

where $D$ is the replay buffer that stores past transitions. The target critic and policy neural networks may have parameters $\theta'$ and $\phi'$. $r_i$ represents the instant reward for the agent $i$.

Different ways for computing the empowerment term $\varepsilon$ may be used, in which $s$ and $a$ may differ. A variant of empowerment for multi-agent systems is transfer empowerment. It may be computed for a pair of agents 201, 202 by maximizing the mutual information $I$ between one agent's actions 212 and another agent's next state. Transfer empowerment may be viewed to be similar to social influence, which may be indicated by the mutual information $I$ between the actions 212 of two agents 201, 202. However, empowerment is directed at maximizing the mutual information $I$. This avoids the need for a model of the other agent (as required by the multi-objective optimization algorithm, MOA). Two different agents may be identified by the indexes $i$ and $j$. The empowerment of a state $s_i$ of agent $i$ may then be computed in one way as

$$\varepsilon(s_i) = \max_{\omega_j} I\big[\,\overrightarrow{a_{j,T}}; s_{i,T}\,|s_i\big]$$

and/or in another way by swapping i and j. $\overrightarrow{a_{j,T}}$ denotes the sequence of one or more actions of agent $j$ and $s_{i,T}$ denotes the future state of agent $i$. The source distribution $\omega_j(a|s)$ is a probability distribution that selects an action $a$ in each state $s$. Training agents 201, 202 (i.e. training critics and/or policies) with empowerment increases the influence that agents 201, 202 have over one another, thus stimulating coordination and/or cooperation.

Apart from empowerment and/or transfer empowerment, a further variant of empowerment, which uses all states and joint actions, may be used. This variant may be referred to as joint empowerment. This notion motivates a global empowered state that is optimal for all agents 201, 202. The empowerment for all agents may be computed by $\varepsilon(\mathbf{s})$ in which bold notation denotes the joint state and the joint action and set of all source distributions $\omega$ (for all agents 201, 202):

$$\mathcal{E}(\boldsymbol{s}) = \max_{\omega} I[\overrightarrow{\mathbf{a}_T}; \mathbf{s}_T | \boldsymbol{s}]$$

The schemes outlined in the present document may be used e.g. for an autonomous robot 100, 110 that in some situations needs to be teleoperated. A further example is a fleet of autonomous vehicles or a swarm of drones.

As indicated above, the empowerment term may be determined by maximizing the mutual information $I$ for a certain source distribution. The source distribution may be represented by a neural network. Maximizing the mutual information $I$ may be achieved by performing backpropagation using gradient ascent as optimization algorithm. The gradient of the lower bound on empowerment may be given by

$$\frac{\partial}{\partial \theta} \hat{\mathcal{I}} \approx \sum_{n=1}^{N} \frac{\partial}{\partial \theta} \left[ \ln \left( q \left( a_t^{(n)} \Big| s_{t+1}^{(n)}, s_t \right) \right) - \ln \left( \omega \left( a_t^{(n)} \Big| s_t \right) \right) \right]$$

In the above formula $q$ denotes a variational approximation of a planning distribution. If the gradients of the mutual information bound may be estimated via Monte-Carlo sampling and the reparametrisation trick, these distributions are not restricted to the discrete case, and may be used for a continuous setting. The distributions $\omega$ and $q$ may be Gaussians. Details are described in D. Barber and F. V. Agakov. The im algorithm: a variational approach to information maximization, In Advances in neural information processing systems, page None, 2003, which is incorporated herein in its entirety.

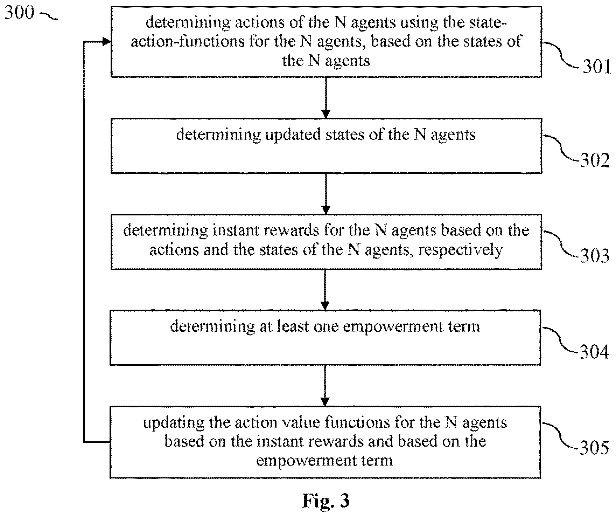

Fig. 3 shows a flow chart of an example method 300 for determining a set of policies 210 for controlling a corresponding set of different acting entities 100, 110 which is represented by a corresponding set of agents 201, 202. The acting entities 100, 110 may be autonomous (street and/or motorized) vehicles. A policy 210 for an acting entity 100, 110 may be a function (e.g. represented by a trained neural network), which is configured to determine a certain action 212 (to be performed by the entity 100, 110) based on the state 211 of the entity 100, 110 (wherein the state 211 is typically determined based on sensor data from one or more sensors 102 of the entity 100, 110, i.e. based on observations).

The method 300 is directed at iteratively training the set of policies 210, e.g. during (simulated) operation of the set of acting entities 100, 110. For this purpose, each entity 100, 110 (or corresponding agent 201, 202) may be provided with a reward function for guiding the behavior of the entity 100, 110. The reward function may comprise one or more terms which motivate or foster e.g.

- a collision free movement of the entity 100, 110; and/or
- a rapid and/or precise movement along a target trajectory for the entity 100, 110.

In this context, the method 300 may make use of a DDPG algorithm for training the set of policies 210.

The method 300 comprises, at a given time instant of an iterative training phase 221, determining 301 a set of actions 212 of the corresponding set of agents 201, 202 using a corresponding set of state-action-functions 230, respectively. The set of state-action-functions 230 is typically dependent on the set of states 211 of the corresponding set of agents 201, 202. In particular, the state-action-function 230 may be configured to and/or may be trained to enable the state-action-function 230 to indicate the cumulated future rewards which are expected for different state-action pairs. Hence, at a given time instant of the iterative training phase 221, the current version of the state-action-function 230 for an agent 201 may be used to determine the action 212 of the agent 201 in dependence of the state 211 of the agent 201 (notably the action 212 that maximizes the value of the state-action-function 230).

Furthermore, the method 300 may comprise determining 302 a set of updated states 211 (for the subsequent time instant) of the corresponding set of agents 201, 202 based on and/or in dependence of the determined set of actions 212. For this purpose, an entity 100, 110 may be modelled using a transition function T (e.g. within a simulator). Alternatively, or in addition, the updated state 211 may be determined based on updated sensor data from the one or more sensors 102 of the entity 100, 110.

The method 300 may further comprise determining 303 a set of instant rewards for the corresponding set of agents 201, 202, based on the set of actions 212 and based on the set of states 211 and/or based on the set of updated states 211 of the corresponding set of agents 201, 202. For this purpose, the reward functions for the different entities 100, 110 or corresponding agents 201, 202 may be used.

The method 300 further comprises determining 304 at least one empowerment term which may be indicative of mutual information and/or correlation between at least one action 212 from the set of actions 212 and at least one updated state 211 from the set of updated states 211. In particular, a joint empowerment term may be determined as outlined in the present document. Alternatively, or in addition, a set of (transfer) empowerment terms for the corresponding set of agents 201, 202 may be determined as outlined in the present document.

In addition, the method 300 comprises updating 305 the set of state-action-functions 230 based on the set of instant rewards and based on the at least one empowerment term. The updating 305 may be performed using the Bellman equation (as outlined in the present document).

The method 300 may be repeated iteratively at a sequence of time instants, e.g. until reaching a pre-determined convergence criteria. The set of policies 210 for controlling the corresponding set of acting entities 100, 110 may be determined based on the updated set of state-action-functions 230, respectively (notably subsequent to convergence of the training phase 221).

By integrating an empowerment term, notably a joint and/or a transfer empowerment term, into the objective function for updating the set of state-action-functions 230, a set of policies 210 may be determined which fosters a cooperative and/or coordinated behavior between different autonomously acting entities 100, 110.

It should be noted that the description and drawings merely illustrate the principles of the proposed methods and systems. Those skilled in the art will be able to implement various arrangements that, although not explicitly described or shown herein, embody the principles of the invention, which scope is defined by the appended claims. Furthermore, all examples and embodiment outlined in the present document are principally intended expressly to be only for explanatory purposes to help the reader in understanding the principles of the proposed methods and systems.

## Claims

1. A computer-implemented method (300) for determining a set of policies (210) for controlling a corresponding set of different acting entities (100, 110) which is represented by a corresponding set of agents (201, 202), wherein an acting entity comprises a control unit which is configured to take driving actions in dependence of a current state of the acting entity, the control unit of the vehicle making use of a policy for determining a driving action based on the state of the acting entity, the method (300) comprising, at a time instant of an iterative training phase (221),

   - determining (301) a set of actions (212) of the corresponding set of agents (201, 202) using a corresponding set of state-action-functions (230), respectively; wherein the set of state-action-functions (230) is dependent on a set of states (211) of the corresponding set of agents (201, 202);
   - determining (302) a set of updated states (211) of the corresponding set of agents (201, 202) based on the determined set of actions (212), by operating the set of entities (100, 110) according to the corresponding set of actions (212) in the context of a simulation and/or in the context of an actual operation of the set of entities (100, 110);
   - determining (303) a set of instant rewards for the corresponding set of agents (201, 202) based on the set of actions (212) and based on the set of states (211) and/or based on the set of updated states (211) of the corresponding set of agents (201, 202), using a corresponding set of reward functions for the corresponding set of agents (201, 202);
   - determining (304) at least one empowerment term which is indicative of mutual information and/or correlation between at least one action (212) from the set of actions (212) and at least one updated state (211) from the set of updated states (211); wherein determining (304) at least one empowerment term comprises determining a set of transfer empowerment terms for the corresponding set of agents (201, 202); wherein a transfer empowerment term for a first agent (201)

      - is indicative of mutual information and/or correlation between the action (212) of the first agent (201) and the updated states (211) of one or more other agents (202) from the set of agents (201, 202); and/or
      - is indicative of mutual information and/or correlation between the actions (212) of one or more other agents (202) from the set of agents (201, 202) and the updated state (211) of the first agent (201); and

      - updating (305) the set of state-action-functions (230) using a Bellman equation for an objective function which depends on the set of instant rewards and which comprises the set of transfer of empowerment terms; wherein the set of policies (210) for controlling the corresponding set of acting entities (100, 110) is determined based on the updated set of state-action-functions (230), respectively, by determining for each possible state (211) an action (212) which maximizes the state-action-function (230).

2. The method (300) of claim 1, wherein the method (300) comprises

   - determining a joint empowerment term for the set of agents (201, 202); wherein the joint empowerment term is indicative of mutual information and/or correlation between the complete set of actions (211) of the set of agents (201, 202) and the complete set of updated states (212) of the set of agents (201, 202); and
- updating (305) the set of state-action-functions (230) based on the joint empowerment term.

3. The method (300) of any previous claims, wherein the at least one empowerment term is indicative of an approximation of a maximum of the mutual information between at least one action (212) from the set of actions (212) and at least one updated state (211) from the set of updated states (211).

4. The method (300) of any previous claims, wherein

- the state-action-functions (230) are each represented by an artificial neural network each comprising a set of parameters; and
- updating (305) the set of state-action-functions (230) comprises updating the set of parameters of the artificial neural networks of the set of state-action-functions (230).

5. The method (300) of any previous claims, wherein the method (300) comprises

- determining sensor data from sensors (102) of the set of acting entities (100, 110); and
- determining the set of states (211) of the corresponding set of agents (201, 202) based on the sensor data.

6. The method (300) of any previous claims, wherein the state-action-function (230) for a first agent (201) depends on

- the action (212) and the state (211) of the first agent (201); and
- the action (212) and the state (211) of at least one other agent (202) from the set of agents (201, 202).

7. The method (300) of any previous claims, wherein the method (300) makes use of a Multi-Agent Deep Deterministic Policy Gradient algorithm for determining the set of policies (210).

8. The method (300) of any previous claims, wherein the method (300) comprises controlling at least one of the set of acting entities (100, 110) using the corresponding policy (210).

9. A training system (101, 200) for determining a set of policies (210) for controlling a corresponding set of different acting entities (100, 110) which is represented by a corresponding set of agents (201, 202); wherein an acting entity comprises a control unit which is configured to take driving actions in dependence of a current state of the acting entity, the control unit of the vehicle making use of a policy for determining a driving action based on the state of the acting entity;
wherein the training system (101, 200) is configured, at a time instant of an iterative training phase (221), to

- determine a set of actions (212) of the corresponding set of agents (201, 202) using a corresponding set of state-action-functions (230), respectively; wherein the set of state-action-functions (230) is dependent on a set of states (211) of the corresponding set of agents (201, 202);
- determine a set of updated states (211) of the corresponding set of agents (201, 202) based on the determined set of actions (212), by operating the set of entities (100, 110) according to the corresponding set of actions (212) in the context of a simulation and/or in the context of an actual operation of the set of entities (100, 110);
- determine a set of instant rewards for the corresponding set of agents (201, 202) based on the set of actions (212) and based on the set of states (211) and/or based on the set of updated states (211) of the corresponding set of agents (201, 202), using a corresponding set of reward functions for the corresponding set of agents (201, 202);
- determine at least one empowerment term which is indicative of mutual information and/or correlation between at least one action (212) from the set of actions (212) and at least one updated state (211) from the set of updated states (211); wherein determining at least one empowerment term comprises determining a set of transfer empowerment terms for the corresponding set of agents (201, 202); wherein a transfer empowerment term for a fist agent (201)

- is indicative of mutual information and/or correlation between the action (212) of the first agent (201) and the updated states (211) of one or more other agents (202) from the set of agents (201, 202); and/or
- is indicative of mutual information and/or correlation between the actions (212) of one or more other agents (202) from the set of agents (201, 202) and the updated state (211) of the first agent (201); and

- update the set of state-action-functions (230) using a Bellman equation for an objective function which depends on the set of instant rewards and which comprises the set of transfer empowerment terms; wherein the set of policies (210) for controlling the corresponding set of acting entities (100, 110) is determined based on the updated set of state-action-functions (230), respectively, by determining for each possible state (211) an action (212) which maximizes the state-action-function (230).

**Patentansprüche**

**1.** Computerimplementiertes Verfahren (300) zum Bestimmen eines Satzes von Richtlinien (210) zur Steuerung eines entsprechenden Satzes verschiedener handelnder Einheiten (100, 110), der durch einen entsprechenden Satz von Agenten (201, 202) repräsentiert wird, wobei eine handelnde Einheiten eine Steuereinheit umfasst, die dazu eingerichtet ist, Fahraktionen in Abhängigkeit von einem aktuellen Zustand der handelnden Einheit durchzuführen, wobei die Steuereinheit des Fahrzeugs eine Richtlinie zum Bestimmen einer Fahraktion auf der Grundlage des Zustands der handelnden Einheit verwendet, wobei das Verfahren (300) zu einem Zeitpunkt einer iterativen Trainingsphase (221) umfasst

Bestimmen (301) eines Satzes von Aktionen (212) des entsprechenden Satzes von Agenten (201, 202) unter Verwendung jeweils eines entsprechenden Satzes von Zustands-Aktionsfunktionen (230); wobei der Satz von Zustands-Aktionsfunktionen (230) von einem Satz von Zuständen (211) des entsprechenden Satzes von Agenten (201, 202) abhängig ist;
Bestimmen (302) eines Satzes von aktualisierten Zuständen (211) des entsprechenden Satzes von Agenten (201, 202) auf der Grundlage des bestimmten Satzes von Aktionen (212), durch Betreiben des Satzes von Einheiten (100, 110) gemäß dem entsprechenden Satz von Aktionen (212) im Kontext einer Simulation und/oder im Kontext eines tatsächlichen Betriebs des Satzes von Einheiten (100, 110);
Bestimmen (303) eines Satzes von Sofortbelohnungen für den entsprechenden Satz von Agenten (201, 202) basierend auf dem Satz von Aktionen (212) und basierend auf dem Satz von Zuständen (211) und/oder basierend auf dem Satz von aktualisierten Zuständen (211) des entsprechenden Satzes von Agenten (201, 202), unter Verwendung eines entsprechenden Satzes von Belohnungsfunktionen für den entsprechenden Satz von Agenten (201, 202);
Bestimmen (304) mindestens einer Empowerment-Bedingung, die auf eine gegenseitige Information und/oder Korrelation zwischen mindestens einer Aktion (212) aus der Menge von Aktionen (212) und mindestens einem aktualisierten Zustand (211) aus der Menge von aktualisierten Zuständen (211) hinweist; wobei das Bestimmen (304) mindestens einer Empowerment-Bedingung das Bestimmen eines Satzes von Übertragungs- Empowerment-Bedingungen für die entsprechende Gruppe von Agenten (201, 202) umfasst; wobei eine Übertragungs-Empowerment-Bedingung für einen ersten Agenten (201)

auf eine gegenseitige Information und/oder Korrelation zwischen der Aktion (212) des ersten Agenten (201) und den aktualisierten Zuständen (211) eines oder mehrerer anderer Agenten (202) aus der Gruppe von Agenten (201, 202) hinweist; und/oder
auf eine gegenseitige Information und/oder Korrelation zwischen den Aktionen (212) eines oder mehrerer anderer Agenten (202) aus der Gruppe von Agenten (201, 202) und dem aktualisierten Zustand (211) des ersten Agenten (201) hinweist; und

Aktualisieren (305) des Satzes von Zustands-Aktionsfunktionen (230) unter Verwendung einer Bellman-Gleichung für eine Zielfunktion, die von dem Satz von Sofortbelohnungen abhängt und die den Satz von Übertragungs- Empowerment-Bedingungen umfasst; wobei der Satz von Richtlinien (210) zur Steuerung des entsprechenden Satzes von handelnden Einheiten (100, 110) jeweils auf der Grundlage des aktualisierten Satzes von Zustands-Aktionsfunktionen (230) bestimmt wird, indem für jeden möglichen Zustand (211) eine Aktion bestimmt wird (212), der die Zustands-Aktionsfunktion (230) maximiert.

**2.** Verfahren (300) nach Anspruch 1, wobei das Verfahren (300) Folgendes umfasst

Bestimmen einer gemeinsamen Empowerment-Bedingung für die Gruppe von Agenten (201, 202); wobei die gemeinsame Empowerment-Bedingung auf gegenseitige Information und/oder Korrelation zwischen dem vollständigen Satz von Aktionen (211) der Gruppe von Agenten (201, 202) und dem vollständigen Satz aktualisierter Zustände (212) der Gruppe von Agenten (201, 202) hinweist; und
Aktualisieren (305) des Satzes von Zustands-Aktionsfunktionen (230) auf der Grundlage der gemeinsamen Empowerment-Bedingung.

3. Verfahren (300) nach einem der vorangegangenen Ansprüche, wobei die mindestens eine Empowerment-Bedingung eine Annäherung an ein Maximum der gegenseitigen Information zwischen mindestens einer Aktion (212) aus der Menge von Aktionen (212) und mindestens einem aktualisierten Zustand (211) aus der Menge von aktualisierten Zuständen (211) angibt.

4. Verfahren (300) nach einem der vorangegangenen Ansprüche, wobei

die Zustands-Aktionsfunktionen (230) jeweils durch ein künstliches neuronales Netzwerk repräsentiert werden, das jeweils einen Satz von Parametern umfasst; und
das Aktualisieren (305) des Satzes von Zustands-Aktionsfunktionen (230) ein Aktualisieren des Satzes von Parametern der künstlichen neuronalen Netze des Satzes von Zustands-Aktionsfunktionen (230) umfasst.

5. Verfahren (300) nach einem der vorangegangenen Ansprüche, wobei das Verfahren (300) umfasst

Ermitteln von Sensordaten von Sensoren (102) der Gruppe von handelnden Einheiten (100, 110); und
Bestimmen des Satzes von Zuständen (211) des entsprechenden Satzes von Agenten (201, 202) auf der Grundlage der Sensordaten.

6. Verfahren (300) nach einem der vorangegangenen Ansprüche, wobei die Zustands-Aktionsfunktion (230) für einen ersten Agenten (201) abhängt von

der Aktion (212) und dem Zustand (211) des ersten Agenten (201); und
der Aktion (212) und dem Zustand (211) mindestens eines anderen Agenten (202) aus der Gruppe von Agenten (201, 202).

7. Verfahren (300) nach einem der vorangegangenen Ansprüche, wobei das Verfahren (300) einen Multi-Agent Deep Deterministic Policy Gradient Algorithmus mit mehreren Agenten verwendet, um den Satz von Richtlinien (210) zu bestimmen.

8. Verfahren (300) nach einem der vorangegangenen Ansprüche, wobei das Verfahren (300) das Steuern mindestens einer der handelnden Einheiten (100, 110) unter Verwendung der entsprechenden Richtlinie (210) umfasst.

9. Trainingssystem (101, 200) zum Bestimmen eines Satzes von Richtlinien (210) zur Steuerung eines entsprechenden Satzes verschiedener handelnder Einheiten (100, 110), der durch einen entsprechenden Satz von Agenten (201, 202) repräsentiert wird; wobei eine handelnde Einheit eine Steuereinheit umfasst, die eingerichtet ist, in Abhängigkeit von einem aktuellen Zustand der handelnden Einheit Fahraktionen durchzuführen, wobei die Steuereinheit des Fahrzeugs eine Richtlinie zur Bestimmung einer Fahraktion auf der Grundlage des Zustands der handelnden Einheit verwendet; wobei das Trainingssystem (101, 200) zu einem Zeitpunkt einer iterativen Trainingsphase (221) eingerichtet ist zum

Bestimmen eines Satzes von Aktionen (212) des entsprechenden Satzes von Agenten (201, 202) jeweils unter Verwendung eines entsprechenden Satzes von Zustands-Aktionsfunktionen (230); wobei der Satz von Zustands-Aktionsfunktionen (230) von einem Satz von Zuständen (211) des entsprechenden Satzes von Agenten (201, 202) abhängig ist;
Bestimmen eines Satzes von aktualisierten Zuständen (211) des entsprechenden Satzes von Agenten (201, 202) auf der Grundlage des bestimmten Satzes von Aktionen (212), durch Betreiben des Satzes von Einheiten (100, 110) gemäß dem entsprechenden Satz von Aktionen (212) im Kontext einer Simulation und/oder im Kontext eines tatsächlichen Betriebs des Satzes von Einheiten (100, 110);
Bestimmen eines Satzes von Sofortbelohnungen für den entsprechenden Satz von Agenten (201, 202) auf der Grundlage des Satzes von Aktionen (212) und basierend auf dem Satz von Zuständen (211) und/oder basierend auf dem Satz von aktualisierten Zuständen (211) des entsprechenden Satzes von Agenten (201, 202) unter Verwendung eines entsprechenden Satzes von Belohnungsfunktionen für den entsprechenden Satz von Agenten (201, 202);
Bestimmen mindestens einer Empowerment-Bedingung, die auf eine gegenseitige Information und/oder Korrelation zwischen mindestens einer Aktion (212) aus dem Satz von Aktionen (212) und mindestens einem aktualisierten Zustand (211) aus dem Satz aktualisierter Zustände (211) hinweist; wobei das Bestimmen der mindestens einen Empowerment-Bedingung das Bestimmen eines Satzes von Übertragungs- Empowerment-Bedingungen für den entsprechenden Satz von Agenten (201, 202) umfasst; wobei eine Übertragungs-Empowerment-Bedingung für einen ersten Agenten (201)

auf eine gegenseitige Information und/oder Korrelation zwischen der Aktion (212) des ersten Agenten (201) und den aktualisierten Zuständen (211) eines oder mehrerer anderer Agenten (202) aus der Gruppe von Agenten (201, 202) hinweist; und/oder

auf eine gegenseitige Information und/oder Korrelation zwischen den Aktionen (212) eines oder mehrerer anderer Agenten (202) aus der Gruppe von Agenten (201, 202) und dem aktualisierten Zustand (211) des ersten Agenten (201) hinweist; und

Aktualisieren des Satzes von Zustands-Aktionsfunktionen (230) unter Verwendung einer Bellman-Gleichung für eine Zielfunktion, die von dem Satz von Sofortbelohnungen abhängt und die den Satz von Übertragungs-Empowerment-Bedingungen umfasst; wobei der Satz von Richtlinien (210) zur Steuerung des entsprechenden Satzes von handelnden Einheiten (100, 110) auf der Grundlage des aktualisierten Satzes von Zustands-Aktionsfunktionen (230) jeweils bestimmt wird, indem für jeden möglichen Zustand (211) eine Aktion (212) bestimmt wird, die die Zustands-Aktionsfunktion (230) maximiert.

## Revendications

1. Procédé (300) mis en oeuvre par ordinateur pour déterminer un jeu de règles (210) pour contrôler un ensemble correspondant de différentes entités agissantes (100, 110) représenté par un ensemble correspondant d'agents (201, 202), une entité agissante comprenant une unité de commande configurée pour effectuer des actions de conduite en fonction de l'état actuel de l'entité agissante, l'unité de commande du véhicule utilisant une règle pour déterminer une action de conduite basée sur l'état de l'entité agissante, le procédé (300) comprenant, à un instant du temps d'une phase itérative d'entraînement (221),

déterminer (301) un ensemble d'actions (212) de l'ensemble d'agents correspondant (201, 202) à l'aide, respectivement, d'un ensemble de fonctions d'état-action correspondant (230); l'ensemble de fonctions d'état-action (230) dépendant d'un ensemble d'états (211) de l'ensemble d'agents correspondant (201, 202) ;
déterminer (302) d'un ensemble d'états mis à jour (211) de l'ensemble d'agents correspondant (201, 202) sur la base de l'ensemble d'actions déterminé (212), en actionnant l'ensemble d'entités (100, 110) conformément à l'ensemble d'actions correspondant (212) dans le cadre d'une simulation et/ou dans le contexte d'une opération réelle de l'ensemble d'entités (100, 110) ;
déterminer (303) un ensemble de récompenses instantanées pour l'ensemble d'agents correspondant (201, 202) sur la base de l'ensemble d'actions (212) et sur la base de l'ensemble d'états (211) et/ou sur la base de l'ensemble d'états mis à jour (211) de l'ensemble d'agents correspondant (201, 202), en utilisant un ensemble correspondant de fonctions de récompense pour l'ensemble d'agents correspondant (201, 202) ;
déterminer (304) au moins un terme d'empowerment indiquant une information mutuelle et/ou une corrélation entre au moins une action (212) de l'ensemble d'actions (212) et au moins un état mis à jour (211) de l'ensemble d'états mis à jour (211) ; la détermination (304) d'au moins un terme d'empowerment comprenant la détermination d'un ensemble de termes d'empowerment de transfert pour l'ensemble d'agents correspondant (201, 202) ; un terme d'empowerment de transfert pour un premier agent (201)

indique une information mutuelle et/ou une corrélation entre l'action (212) du premier agent (201) et les états mis à jour (211) d'un ou de plusieurs autres agents (202) de l'ensemble d'agents (201, 202) ; et/ou indique une information mutuelle et/ou une corrélation entre les actions (212) d'un ou plusieurs autres agents (202) de l'ensemble d'agents (201, 202) et l'état mis à jour (211) du premier agent (201) ; et

mettre à jour (305) l'ensemble de fonctions d'état-action (230) à l'aide d'une équation de Bellman pour une fonction objective qui dépend de l'ensemble de récompenses instantanées et qui comprend l'ensemble de termes d'empowerment de transfert; le jeu de règles (210) pour contrôler l'ensemble correspondant d'entités agissantes (100, 110) étant déterminé sur la base de l'ensemble mis à jour de fonctions d'état-action (230), respectivement, en déterminant pour chaque état possible (211) une action (212) qui maximise la fonction d'état-action (230).

2. Procédé (300) selon la revendication 1, **caractérisé en ce que** le procédé (300) comprend

déterminer un terme d'empowerment (210) conjoint pour l'ensemble d'agents (201, 202) ; le terme d'empowerment conjoint indiquant une information mutuelle et/ou une corrélation entre l'ensemble complet d'actions (211) de l'ensemble d'agents (201, 202) et l'ensemble complet d'états mis à jour (212) de l'ensemble d'agents (201, 202) ; et

mettre à jour (305) l'ensemble des fonctions d'état-action (230) sur la base du terme d'empowerment conjoint.

3. Procédé (300) selon l'une des revendications précédentes, dans lequel au moins un terme d'empowerment indique une approximation d'un maximum d'informations mutuelles entre au moins une action (212) de l'ensemble d'actions (212) et au moins un état mis à jour (211) issu de l'ensemble d'états mis à jour (211).

4. Procédé (300) selon l'une des revendications précédentes, dans lequel

les fonctions d'état-action (230) sont représentées chacune par un réseau neuronal artificiel comprenant chacun un ensemble de paramètres ; et

la mise à jour (305) de l'ensemble de fonctions d'état-action (230) comprend la mise à jour de l'ensemble de paramètres des réseaux neuronaux artificiels de l'ensemble de fonctions d'état-action (230).

5. Procédé (300) selon l'une des revendications précédentes, le procédé (300) comprenant

déterminer les données des capteurs à partir des capteurs (102) de l'ensemble des entités agissantes (100, 110) ; et

déterminer l'ensemble d'états (211) de l'ensemble d'agents correspondant (201, 202) sur la base des données du capteur.

6. Procédé (300) selon l'une des revendications précédentes, selon lequel la fonction d'état et d'action (230) d'un premier agent (201) dépend de

l'action (212) et l'état (211) du premier agent (201) ; et

l'action (212) et l'état (211) d'au moins un autre agent (202) de l'ensemble d'agents (201, 202).

7. Procédé (300) selon l'une des revendications précédentes, dans lequel le procédé (300) utilise un algorithme Multi-Agent Deep Deterministic Policy Gradient pour déterminer le jeu de règles (210).

8. Procédé (300) selon l'une des revendications précédentes, le procédé (300) comprenant contrôler au moins l'une des entités agissantes (100, 110) à l'aide de la règle correspondante (210).

9. Système d'entraînement (101, 200) pour déterminer un jeu de règles (210) pour contrôler un ensemble correspondant de différentes entités agissantes (100, 110) qui est représenté par un ensemble correspondant d'agents (201, 202) ; une entité agissante comprenant une unité de commande configurée pour effectuer des actions de conduite en fonction de l'état actuel de l'entité agissante, l'unité de commande du véhicule utilisant une règle pour déterminer une action de conduite basée sur l'état de l'action entité ; dans laquelle le système d'entraînement (101, 200) est configuré, à un instant du temps d'une phase itérative d'entraînement (221), pour

déterminer un ensemble d'actions (212) de l'ensemble d'agents correspondant (201, 202) à l'aide d'un ensemble correspondant de fonctions d'état-action (230), respectivement ; l'ensemble de fonctions d'état-action (230) dépendant d'un ensemble d'états (211) de l'ensemble d'agents correspondant (201, 202) ;

déterminer un ensemble d'états mis à jour (211) de l'ensemble d'agents correspondant (201, 202) sur la base de l'ensemble d'actions déterminé (212), en actionnant l'ensemble d'entités (100, 110) conformément à l'ensemble d'actions correspondant (212) dans le cadre d'une simulation et/ou dans le contexte d'une opération réelle de l'ensemble d'entités (100, 110) ;

déterminer un ensemble de récompenses instantanées pour l'ensemble d'agents correspondant (201, 202) sur la base de l'ensemble d'actions (212) et sur la base de l'ensemble d'états (211) et/ou sur la base de l'ensemble d'états mis à jour (211) de l'ensemble d'agents correspondant (201, 202), en utilisant un ensemble correspondant de fonctions de récompense pour l'ensemble d'agents correspondant (201, 202) ;

déterminer au moins un terme d'empowerment qui indique une information mutuelle et/ou une corrélation entre au moins une action (212) de l'ensemble d'actions (212) et au moins un état mis à jour (211) de l'ensemble d'états mis à jour (211) ; la détermination d'au moins un terme d'empowerment comprenant la détermination d'un ensemble de termes d'empowerment de transfert pour l'ensemble d'agents correspondant (201, 202) ; un terme d'empowerment de transfert pour un premier agent (201)

indique une information mutuelle et/ou une corrélation entre l'action (212) du premier agent (201) et les états mis à jour (211) d'un ou de plusieurs autres agents (202) de l'ensemble d'agents (201, 202) ; et/ou indique une information mutuelle et/ou une corrélation entre les actions (212) d'un ou plusieurs autres agents (202) de l'ensemble d'agents (201, 202) et l'état mis à jour (211) du premier agent (201) ; et

mettre à jour l'ensemble de fonctions d'état-action (230) à l'aide d'une équation de Bellman pour une fonction objective qui dépend de l'ensemble de récompenses instantanées et qui comprend l'ensemble de termes d'empowerment de transfert ; dans laquelle le jeu de règles (210) pour contrôler l'ensemble correspondant d'entités agissantes (100, 110) est déterminé sur la base de l'ensemble mis à jour de fonctions d'état-action (230), respectivement, en déterminant pour chaque état possible (211) une action (212) qui maximise le fonction d'état-action (230).

**Fig. 1a**

**Fig. 1b**

**Fig. 2**

300 ⁓

determining actions of the N agents using the state-
action-functions for the N agents, based on the states of
the N agents

⁓301

determining updated states of the N agents

⁓302

determining instant rewards for the N agents based on the
actions and the states of the N agents, respectively

⁓303

determining at least one empowerment term

⁓304

updating the action value functions for the N agents
based on the instant rewards and based on the
empowerment term

⁓305

**Fig. 3**

**REFERENCES CITED IN THE DESCRIPTION**

**Patent documents cited in the description**

- US 20190266489 A1
- US 2020090074 A1

- US 2020244707 A1

**Non-patent literature cited in the description**

- **CHRISTOPH SALGE ; CORNELIUS GLACKIN ; DANIEL POLANI.** Empowerment - An Introduction. *arxiv: 1310.1863v2 [cs.AI,* 08 October 2013

- **R. LOWE ; Y. I. WU ; A. TAMAR ; J. HARB ; O. P. ABBEEL ; I. MORDATCH.** Multi-agent actor critic for mixed cooperative-competitive environments. *Advances in neural information processing systems,* 2017, 6379-6390